(19) Europäisches Patentamt
European Patent Office
Office européen des brevets

(11) **EP 3 627 403 A1**

(12) **EUROPEAN PATENT APPLICATION**

(43) Date of publication:
**25.03.2020 Bulletin 2020/13**

(51) Int Cl.:
**G06N 7/00** *(2006.01)*     **G06N 3/04** *(2006.01)*
**G06N 3/08** *(2006.01)*     **G06N 5/00** *(2006.01)*

(21) Application number: **18465576.9**

(22) Date of filing: **20.09.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Elektrobit Automotive GmbH
91058 Erlangen (DE)**

(72) Inventor: **Grigorescu, Sorin Mihai
500132 Brasov (RO)**

(74) Representative: **Thies, Stephan
Continental Teves AG & Co. oHG
Intellectual Property
Guerickestrasse 7
60488 Frankfurt/Main (DE)**

(54) **TRAINING OF A ONE-SHOT LEARNING CLASSIFIER**

(57)    The present disclosure is related to a method for training a one-shot learning classifier, as well as to a computer program code and a one-shot learning classifier implementing said method. In a first step, an input training sample is received (10) . A set of synthetic training samples is then generated (11) from the input training sample. For this purpose a set of generalization functions is used. Finally, a deep neural network classifier is trained (12) on the set of synthetic training samples.

## FIG 1

```
Receiving an input
training sample                                      10

Generating a set of
synthetic training samples                           11

Training a deep neutral network
classifier on the set of
synthetic training samples                           12
```

EP 3 627 403 A1

**Description**

The present disclosure is related to a method for training a one-shot learning classifier. The disclosure is further related to a computer program code and a one-shot learning classifier implementing said method.

An important objective of artificial intelligence systems is one-shot learning, where the goal is to learn how to recognize objects, or patterns, after a single object instance has been used for learning its representation.

Consider, for example, the field of driver assistance systems in the area of automotive software, in particular the detection and classification of objects in driving environments. Here it would be desirable to enable one-shot learning using, for example, a single image of a particular road sign.

The traditional processing pipeline for detecting and classifying objects is mainly based on two stages. The first stage detects a potential region of interest, e.g. a rectangle bounding an object of interest in an image. The second stage classifies that region according to a set of learned object classes. In computer vision, this approach was mainly used with adaptive boosting (AdaBoost) and support vector machines (SVM) classifiers trained on handcrafted features such as HAAR, local binary patterns (LBP) or histograms of oriented gradients (HOG).

With the rise of deep learning in the last decades, this traditional pipeline was replaced by deep convolutional neural networks (CNN) and recurrent neural networks (RNN). These types of networks replaced the traditional handcrafted features with learned representations of the modelled objects within the layers of the deep neural net. The representation learning approach is able to discover by itself significant features in the input data by transforming the raw input into higher levels of abstraction, suitable for further regression or classification tasks.

Deep learning is usually based on a deep neural network (DNN) trained in a supervised manner using an error backpropagation algorithm. Backpropagation iteratively adapts the network's parameters, also known as weights, in order to find a suitable representation of the input training data within its layers. Supervised learning means that the network receives pairs of training samples composed of object features, e.g. images of specific objects, along with their corresponding object class given as a label. Despite their great successes, deep learning systems require large manually annotated databases for training. Building such databases is challenging in particular in the field of autonomous driving, since it is difficult to cover all situations and object types that can appear on the road. In addition, this approach does not follow a generalization paradigm, which would allow an artificial intelligence software to extrapolate information from new occurring scenes and to adapt its knowledge base. In other words, in order to incorporate new information within an artificial intelligence build around classical supervised learning, the deep neural network has to be always retrained with a new recompiled training database, which contains the latest manually annotated information that represents new encountered situations. The continuous manual labelling of the training databases is a tedious process that is prone to errors, having in mind the complex dynamic driving environment and the large number of objects that have to be recognized on the road.

One approach for one-shot learning for the case of visual object recognition, named Bayesian One-Shot [1], is based on a Bayesian framework which learns new object categories based on knowledge acquired from previously learned categories. In this approach object categories are represented by probabilistic models, where the prior knowledge is learned from a training database as a probability density function on the parameters of the models.

A Bayesian generative model approach to one-shot learning for the purpose of a recognition of hand-written characters has been proposed in [2] . The method generates synthetic characters in the form of raw data by using a set of primitive actions which combine character subparts. A dictionary of parts was also used in [11] to generate artificial hand-written characters.

Furthermore, US 9,141,881 B2 describes a method of classification and object detection. A maximum hypersphere is created in the feature space according to support vectors, wherein the support vectors are one or more feature vectors in a feature space. A center of the created maximum hypersphere is calculated according to the support vector (s) . A decision hyper sphere is created with the same center as the calculated center of the created maximum hypersphere. Feature vector(s) are classified within the decision hypersphere, as positive feature vector (s). False positive rate is kept to a predetermined level to provide effective object detection.

It is an object of the present invention to provide an improved solution for training a one-shot learning classifier.

This object is achieved by a method for training a one-shot learning classifier according to claim 1, by a computer program code according to claim 9, and by a one-shot learning classifier according to claim 10. The dependent claims include advantageous further developments and improvements of the present principles as described below.

According to a first aspect, a method for training a one-shot learning classifier comprises:

- receiving an input training sample;
- generating a set of synthetic training samples from the input training sample using a set of generalization functions; and
- training a deep neural network classifier on the set of synthetic training samples.

Similarly, a computer program code comprises instructions, which, when executed by at least one processor, cause the at least one processor to perform the steps of:

- receiving an input training sample;
- generating a set of synthetic training samples from the input training sample using a set of generalization functions; and
- training a deep neural network classifier on the set of synthetic training samples.

According to a further aspect, a one-shot learning classifier comprises:

- an input for receiving an input training sample;
- a generalization generator for generating a set of synthetic training samples from the input training sample using a set of generalization functions; and
- a deep neural network classifier configured to be trained on the set of synthetic training samples.

The proposed solution is a generative semi-parametric algorithm for one-shot learning, entitled Generative One-Shot Learning (GOL). While traditional supervised learning systems require millions of samples for training the classifier, the present solution only requires a single one-shot object pattern for training. In comparison to Bayesian One-Shot, Generative One-Shot Learning does not rely on large training databases priors for learning object classes. Generative One-Shot Learning is able to learn object probability density functions solely on one-shot objects by maximising the generalization energy and the classification accuracy. Furthermore, Generative One-Shot Learning is a general one-shot learning framework that can be adapted to completely new problems solely by changing the structure of the functions generalization generator. For a high computing performance, the approach is preferably implemented in the C++ programming language and run on a standard multi-core CPU processor or a GPU graphics card.

Although similar to Generative One-Shot Learning due to its generative nature, the Bayesian generative approach in [2] is limited to the image character recognition use case, without providing a general framework for one-shot learning. Generative One-Shot Learning can be applied without any modifications to a large number of one-shot pattern recognition challenges, such as recognition of traffic signs, recognition of hand written characters, or even general-purpose object detection on a benchmark dataset.

In one advantageous embodiment, parameter matrices for the set of generalization functions are determined in a Pareto optimization procedure using a set of regularization samples and the set of synthetic training samples. A Pareto optimization procedure is useful for multi-objective optimization problems, where no single solution exists that simultaneously optimizes each objective. In such case, a number of Pareto-optimal solutions can be found.

In one advantageous embodiment, the Pareto optimization procedure takes into consideration a generalization energy and a classification accuracy. The generalization energy quantifies the generalization error between the synthetic training samples and the set of regularization samples. It may be defined as a log-likelihood similarity metric between the regularization samples and the set of synthetic training samples. The classification accuracy may have a probability measure '1' if all synthetic samples have been classified correctly and '0' if none of the synthetic training samples has been classified correctly. Together the two measures provide a useful basis for evaluating the classification.

In one advantageous embodiment, the generalization energy is defined as a Bhattacharyya distance metric between the regularization samples and the set of synthetic training samples. The Bhattacharyya distance is a well-suited metric for measuring the similarity of two probability distributions.

In one advantageous embodiment, the Pareto optimization procedure is repeated when a new regularization sample becomes available. In this way, the generalization capabilities of the generalization functions are constantly improved when new regularization samples are available.

In one advantageous embodiment, the one-shot learning classifier is configured to classify road signs. The proposed one-shot learning classifier is ideally suited to act as an artificial intelligence system for environment perception in autonomous driving. The classifier can organically adapt to new complex situations and learn from the scarce available information describing new driving scenes.

Further details of the present solution will become apparent from the following description and the appended claims in combination with the drawings.

**Figures**

Fig. 1    schematically illustrates a method for training a one-shot learning classifier;

Fig. 2    schematically illustrates a first embodiment of a one-shot learning classifier;

Fig. 3    schematically illustrates a second embodiment of a one-shot learning classifier;

Fig. 4    shows a block diagram of Generative One-Shot Learning;

Fig. 5    illustrates the application of the Generative One-Shot Learning algorithm to a 1-dimensional one-shot learning problem; and

Fig. 6    shows synthetic samples generated during a training of the Generative One-Shot Learning algorithm for autonomous vision.

**Detailed description**

The present description illustrates the principles of the present disclosure. It will thus be appreciated that those skilled in the art will be able to devise various arrangements that, although not explicitly described or shown herein, embody the principles of the disclosure.
All examples and conditional language recited herein are intended for educational purposes to aid the reader in understanding the principles of the disclosure and the concepts contributed by the inventor to furthering the art, and are to be construed as being without limitation to such specifically recited examples and conditions.
Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.
Thus, for example, it will be appreciated by those skilled in the art that the diagrams presented herein represent conceptual views of illustrative circuitry embodying the principles of the disclosure.
The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.
Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.
In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

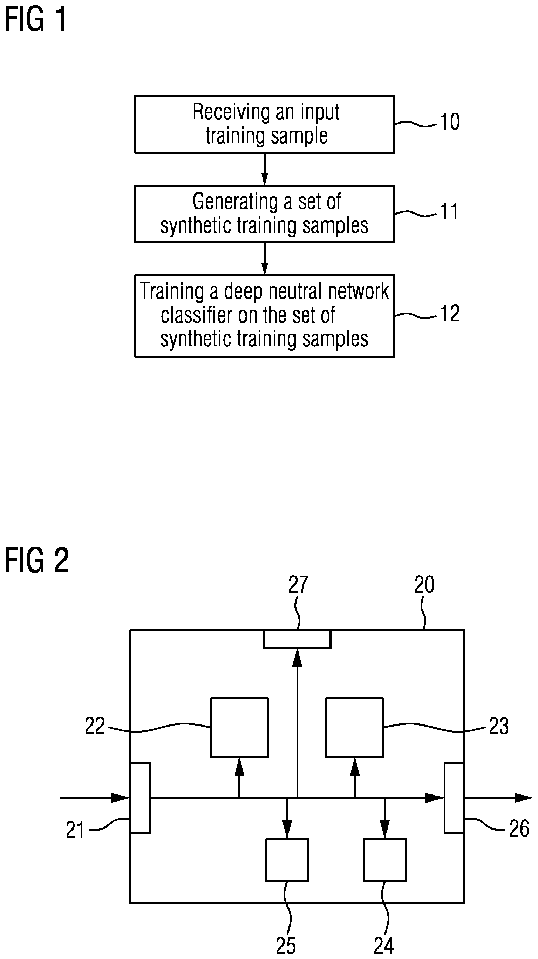

Fig. 1 schematically illustrates a method for training a one-shot learning classifier. In a first step, an input training sample is received 10. A set of synthetic training samples is then generated 11 from the input training sample. For this purpose, a set of generalization functions is used. Finally, a deep neural network classifier is trained 12 on the set of synthetic training samples. Parameter matrices for the set of generalization functions may be determined in a Pareto optimization procedure using a set of regularization samples and the set of synthetic training samples. The Pareto optimization procedure may take a generalization energy and a classification accuracy into consideration. The Pareto optimization procedure is preferably repeated when a new regularization sample becomes available.
Fig. 2 schematically illustrates a block diagram of a first embodiment of a one-shot learning classifier 20. The classifier 20 has an input 21 for receiving an input training sample. A generalization generator 22 generates a set of synthetic training samples from the input training sample. For this purpose, the generalization generator 22 makes use of a set of generalization functions. The classifier 20 further has a deep neural network classifier 23, which is configured to be trained on the set of synthetic training samples. Data generated by the classifier 20 can be stored in a local storage unit 25 f or made available for further processing via an output 26. The output 26 may also be combined with the input 21 into a single bidirectional interface. Parameter matrices for the set of generalization functions may be determined in a Pareto optimization procedure using a set of regularization samples and the set of synthetic training samples. The Pareto optimization procedure may take a generalization energy and a classification accuracy into consideration. The Pareto optimization procedure is preferably repeated when a new regularization sample becomes available.

The generalization generator 22 and the deep neural network classifier 23 may be controlled by a controller 24. A user interface 27 may be provided for enabling a user to modify settings of the generalization generator 22, the deep neural network classifier 23, or the controller 24. The generalization generator 22, the deep neural network classifier 23, and the controller 24 can be embodied as dedicated hardware units. Of course, they may likewise be fully or partially combined into a single unit or implemented as software running on a processor.

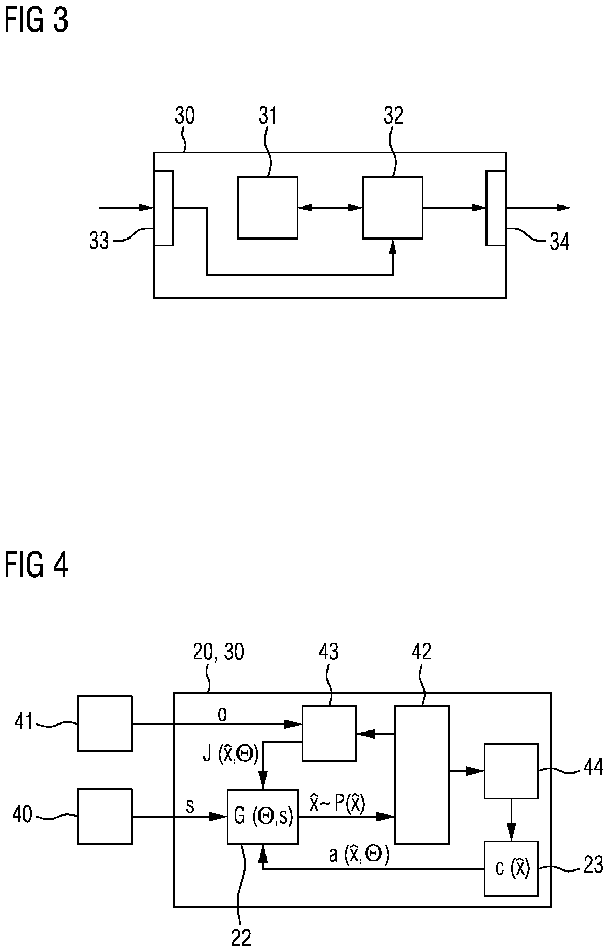

A block diagram of a second embodiment of a one-shot learning classifier 30 is illustrated in Fig. 3. The classifier 30 comprises a processing device 31 and a memory device 32. For example, the classifier 30 may be a computer or a workstation. The memory device has stored instructions that, when executed by the processing device 31, cause the classifier 30 to perform steps according to one of the described methods. The instructions stored in the memory device 32 thus tangibly embody a program of instructions executable by the processing device 31 to perform program steps as described herein according to the present principles. The classifier 30 has an input 33 for receiving data. Data generated by the processing device 31 are made available via an output 34. In addition, such data may be stored in the memory device 32. The input 33 and the output 34 may be combined into a single bidirectional interface.

The processing device 31 as used herein may include one or more processing units, such as microprocessors, digital signal processors, or a combination thereof.

The local storage unit 25 and the memory device 32 may include volatile and/or non-volatile memory regions and storage devices such as hard disk drives, optical drives, and/or solid-state memories.

In the following, a more detailed description of the Generative One-Shot Learning approach shall be given with reference to Fig. 4 to Fig. 6.

Fig. 4 shows a block diagram of Generative One-Shot Learning. The approach is based on three components:

- a generalization generator 22 composed of a set of generalization functions used to generate artificial sets of training samples 42 from a single template or training object 40;
- a generalization energy measure computed by a generalization energy computation block 43, which quantifies the generalization error between the artificially generated samples 42 and a small set of regularization samples 41; and
- a deep neural network classifier 23 trained on the synthetic training samples 42 with the aid of a backpropagation training block 44.

The model architecture aims at obtaining a stable classifier $c(\hat{x})$ trained on a set of synthetic samples $\hat{x} \sim P(\hat{x})$ generated from one-shot instances of objects of interest. The generative nature of the model tries to capture the probability density function $P(\hat{x})$ as close as possible to the real probability density function $P(x)$, from which the real samples $x$ are drawn. Each one-shot object $s_i$ is stored in the one-shot object set:

$$S = \{(s_i, y_i)\}_{i=1}^{k}, \qquad (1)$$

where $s_i$ is a one-shot instance of an object with label $y_i$, meaning that the size of $S$ corresponds to the number $k$ of object classes that the classifier $c(\hat{x})$ will learn. Each synthetic sample from $\hat{x}$ will have a corresponding label:

$$\hat{x} = \{(\hat{x}_i, y_i)\}_{i=1}^{m}, \qquad (2)$$

where $m \gg k$. Typically, the number $m$ of synthetic samples is very large, depending on the number of classes that are to be classified, as well as on the size of the feature vector describing an object.

The goal of the generalization generator is to find the set $\hat{x}_{i=1}^{k}$ that describes the real probability density $P(\hat{x})$ from which real-objects are drawn as close as possible: $x \sim P(x)$. The synthetic descriptions $\hat{x}$ are obtained by applying a series of generalization functions of the generalization generator:

$$G(\Theta, \cdot) = [g(\theta_1, \cdot)^{(1)}, g(\theta_2, \cdot)^{(2)}, \ldots, g(\theta_n, \cdot)^{(n)}], \qquad (3)$$

where $G(\Theta, \cdot)$ is a family of functions which, applied iteratively to a one-shot instance $s_i$, will generate a set of synthetic

descriptions $\hat{x}$. Each $\theta_i$ is a vector containing the parameters of its specific $g(\cdot)^{(i)}$ function, thus making $\Theta \in \mathbb{R}^2$ a 2-dimensional matrix accommodating the complete set of parameters of the generalization generator. The Pareto optimization procedure of the Generative One-Shot Learning algorithm learns a collection $\Theta^* \in \mathbb{R}^{2 \times l}$ of optimal parameter matrices $\Theta$:

$$\Theta^* = [\Theta_1^*, \Theta_2^*, \dots, \Theta_l^*], \qquad (4)$$

where $l$ is the number of Pareto-optimal solutions obtained through the training procedure. Each $\Theta_i^*$ will generate a set of synthetic samples from $\hat{x}$, describing the one-shot learning object.

In order to improve the convergence of the algorithm, the concept of regularization samples, or experiences $P(x)$, is introduced. The additional information provided by the regularization samples is useful, but not strictly necessary, for the convergence of the algorithm. $P(x)$ describes the real probability density function from which real-world samples $o$ are drawn, $o \sim P(x)$. In comparison to the number of artificial samples generated for the training of $c(\hat{x})$, the number of regularization samples is much smaller, i.e. $\dim(o) \ll m$. The purpose of the regularization samples is to ensure that $\hat{x}$ is as close as possible the real data distribution $P(x)$. The classifier $c(\hat{x})$ cannot be trained directly with the regularization samples due to their small number, which would make the generalization error of $c(\hat{x})$ very large. The probability of class $k$ for an example $i$ is computed using the standard softmax function.

Basically, the Generative One-Shot Learning model is a mapping between the one-shot objects $S$ and the classifier, $S \to c(\cdot)$, based on the obtained synthetic samples $\hat{x}$. The probabilistic model of the Generative One-Shot Learning algorithm can be described as a probability density function that generates $\hat{x}$, given a set of one-shot objects and a small set of regularization samples:

$$P(\hat{x} \mid S, E, \Theta) = \mathcal{N}\big(o; G(\Theta, S)\big). \qquad (5)$$

The algorithm determines the model's parameters as a set of Pareto-optimal solutions by iteratively generating synthetic samples, which drives the accuracy of classification and the value of the generalization energy. The optimization procedure does not search for a fixed size, or even finite, set of model parameters, but for a Pareto-optimal solution set.

The training of the Generative One-Shot Learning algorithm implies the learning of the set of optimal parameters $\Theta_i^*$, which maximizes the generalization energy and the classification accuracy. A multi-objective Pareto optimization solution is proposed for training the Generative One-Shot Learning system. The nature of the training is bi-objective due to the two functional values that have to be optimized, but also because there exists not only one instance of optimal parameters, but a number of Pareto-optimal solutions defined as a matrix $\Theta_i^*$. The bi-objective nature of the training is natural, since the Generative One-Shot Learning algorithm is intended to generalize on unseen data, while increasing the classification accuracy on synthetic data as much as possible. Also, due to the very scarce information about the probability density function of the real data, a single-objective training approach would create a classifier that would overfit the synthetic information.

The multi-objective optimization problem takes into account a number of functional values that have to be either minimized or maximized, subject to a number of possible constraints that any feasible solution must satisfy:

$$\begin{aligned}
\text{minimize/ maximize } f_m(\Theta), && m = 1, 2, \dots, M \\
\text{subject to } g_j(\Theta) \geq 0, && j = 1, 2, \dots, J \\
h_k(\Theta) = 0, && k = 1, 2, \dots, K \\
\theta_i^{(L)} \leq \theta_i \leq \theta_i^{(U)}, && i = 1, 2, \dots, n
\end{aligned} \qquad (6)$$

where $f_m(\Theta)$ are $M$ objectives, with $M \geq 2$, and $g_j(\Theta)$ and $h_k(\Theta)$ are constraints set on the optimization process. $\theta_i^{(L)}$

and $\theta_i^{(U)}$ are lower, respectively upper, variable constraint bounds. A solution $\Theta \in \mathbb{R}^n$ is a vector of n decision variables:

$$\Theta = [\theta_1, \theta_2, \dots, \theta_n]^T. \qquad (7)$$

Within the Generative One-Shot Learning approach, the optimization objective is to find the set of Pareto-optimal solutions $\Theta^*$ that can be used to generate synthetic data from one-shot objects. The training is made in variable *T* episodes, making it possible to constantly improve the generalization capabilities of the functions $G(\cdot)$, once new regularization samples are available.

Taking into account the generalization energy and the classification accuracy performance metrics, and following the Pareto optimization framework of Equation (6), the bi-objective optimization problem can be formulated as:

$$\begin{aligned} \max \left[ J(\hat{x}, \Theta), \quad a(\hat{x}, \Theta) \right] \\ \text{such that } \theta_i^{(L)} \le \theta_i \le \theta_i^{(U)}, \quad i = 1, 2, \dots, n \end{aligned} \qquad (8)$$

where $J(\hat{x}, \Theta)$ and $a(\hat{x}, \Theta)$ are the generalization loss and classification accuracy cost functions, respectively. The learning procedure is not driven by the inequality and equality constraints of Equation (6), but bounded by the lower and upper variable constraint bounds.

The generalization energy $J(\cdot)$ is a real-valued function defined as a log-likelihood similarity metric between the regularization samples *o* and the synthetic data $\hat{x}$:

$$J(\hat{x}(t), \Theta) = \mathbb{E}_{\hat{x} \sim P(\hat{x}), o \sim P(\hat{x})} \| o - \hat{x}(t) \|, \qquad (9)$$

where Equation (9) expresses the probability of the synthetic data to be drawn from the regularization samples.

The second objective function is the classification accuracy $a(\hat{x}(t), \Theta) \in [0,1]$, which has the probability measure 1 if all synthetic samples have been classified correctly and 0 if none has been correctly classified:

$$a(\hat{x}(t), \Theta) = \frac{\sum 1\{\arg\max c(\hat{x}) = y_i\}}{m}, \qquad (10)$$

where $\arg\max c(\hat{x})$ returns the predicted class of the classifier and *m* is the number of synthetic samples. $1\{\cdot\}$ is an indicator function which returns 1 if the expression evaluated within the brackets is true and 0 otherwise.

A pseudocode of the Generative One-Shot Learning algorithm is as follows:

**Data:** One-shot object $s \sim P(x)$. Regularization samples $o \sim P(x)$.

**Result:** Probability density function $P(\hat{x})$. Pareto-optimal artificially generated samples $\hat{x} \sim P(\hat{x})$. Classifier $c(\hat{x})$.

**while** *initialization* **do**

Sample batch of $n$ generalization functions $G(\Theta, s) = \left[ g(\theta_1, s)^{(1)}, \dots, g(\theta_n, s)^{(n)} \right]$ from the generalization generator.

Initialize the generalization function parameters $\Theta = [\theta_1, \dots, \theta_n]^T$.

**end**

**for** $t = 1, \dots, T$ **do**

Generate synthetic data $\hat{x}$ as $m$ artificial support samples $\hat{x}(t) \sim P(G, s)$.

Train $c(\hat{x})$ on the synthetic data $\hat{x}$.

Sample batch of $q$ regularization samples $o \sim E$.

Compute the generalization energy:

$$J(\hat{x}(t), \Theta) = \mathbb{E}_{\hat{x} \sim P(\hat{x}), o \sim P(\hat{x})} \log p_{model}(o|\hat{x})$$

Compute the classification accuracy:

$$a(\hat{x}(t), \Theta) = \frac{\sum 1\{\arg\max c(\hat{x}) = y_i\}}{m}$$

Evaluate $\Theta$ as Pareto-optimal solution.

**if** $\Theta$ is *Pareto-optimal* **then**

Store $\Theta$ in $\Theta^*$.

Adapt the $\Theta$ values

**end**

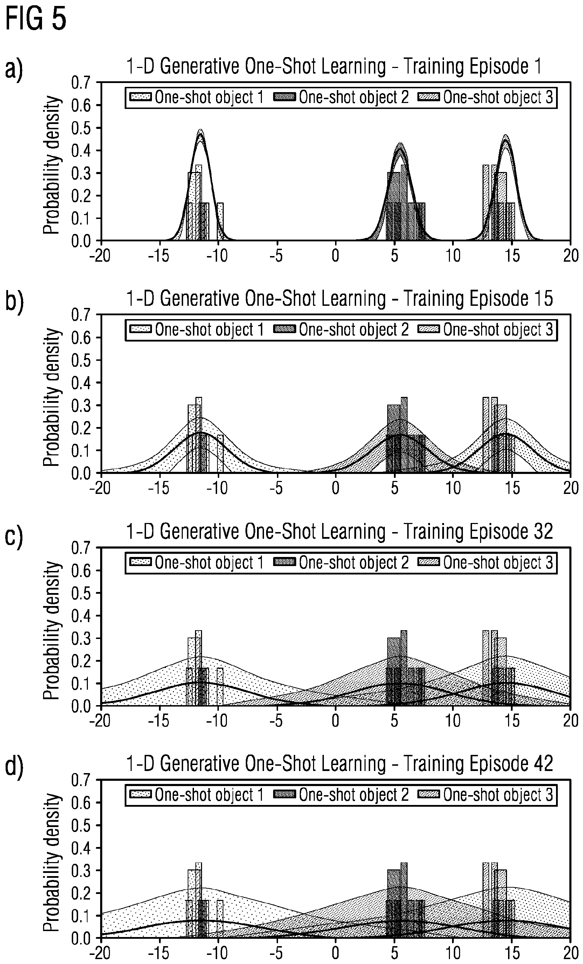

An educational example of application of the Generative One-Shot Learning algorithm to a 1-dimensional one-shot learning problem is presented in Fig. 5, where the objective is to construct a classifier from three one-shot objects, represented by the values $s$ = {-12,5,14} on the *x*-axis, and 30 regularization samples, i.e. 10 for each one-shot value.

With each epoch of the training loop, a number of 10.000 synthetic samples are generated per object, as a new probability density function $P(\hat{x})$. The generalization generator has a single function $g(\theta, s)$ responsible for generating synthetic samples for the three classes taken into consideration. The parameters of the model are represented by the three standard deviations $\sigma \in \mathbb{R}^3$ corresponding to the generative data model $P(\hat{x})$. The multi-objective optimization procedure has to determine the Pareto-optimal parameter set $\theta^*$ = $\sigma^*$. The regularization samples are used here solely to determine the initial $s$ values. In the figure, snapshots of the artificial samples taken during different episodes of the learning process are shown in (a) to (d). $P(\hat{x})$ is drawn with continuous lines.

The Generative One-Shot Learning algorithm can been used in autonomous vision to recognize objects of interest on or along the road, such as traffic signs. Provided a set of one-shot road signs templates $S$, the algorithm is able to train a deep convolutional neural network $c(\hat{x})$, which can reliably recognize in real-world image samples the category of the object represented in the image. The adaptation of the Generative One-Shot Learning algorithm to the image domain requires a definition of the generalization generator and the structure of the generalization energy function. For this purpose the image deformation functions described in EP 3 343 432 A1 can be used.

The generalization energy $J(\hat{x}(t),\Theta)$ is defined as a Bhattacharyya distance metric between the synthetic data and the regularization samples:

$$J(\hat{x}(t),\Theta) = \sum_{i=1}^{q} \sum_{j=1}^{m} \sqrt{1 - \frac{1}{\sqrt{\bar{o}^{(i)} \cdot \bar{x}^{(i,j)} \cdot N^2}} \cdot \sum_{k=0}^{N} \sqrt{o_k^{(i)} \cdot \bar{x}_k^{(i,j)}}} , \qquad (11)$$

where $q$ is the number of regularization samples $o \sim P(x)$, $m$ is the number of generated artificial samples, and $N$ is the length of the feature vectors. $\bar{x}_k^{(i,j)}$ denotes the $j$-th sample in the dataset corresponding to the $i$-th object $o^{(i)}$ of the same class. In other words, the comparison between the artificial and the regularization samples is made only between objects of the same class. $\bar{o}$ and $\bar{x}$ are the mean vectors of the two sample sets, respectively.

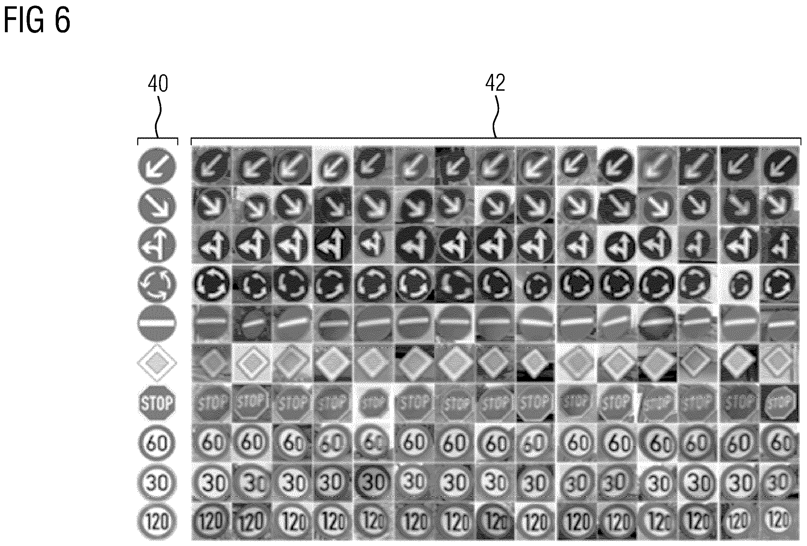

An example of synthetic samples 42 generated during the training of the Generative One-Shot Learning algorithm for a recognition of road signs is shown in Fig 6. The first column represents the one shot objects 40, whereas the next 15 columns are artificial random samples 42 generated at different training stages.

It is to be understood that the proposed method and apparatus may be implemented in various forms of hardware, software, firmware, special purpose processors, or a combination thereof. Special purpose processors may include application specific integrated circuits (ASICs), reduced instruction set computers (RISCs) and/or field programmable gate arrays (FPGAs). Preferably, the proposed method and apparatus are implemented as a combination of hardware and software. Moreover, the software is preferably implemented as an application program tangibly embodied on a program storage device. The application program may be uploaded to, and executed by, a machine comprising any suitable architecture. Preferably, the machine is implemented on a computer platform having hardware such as one or more central processing units (CPU), a random access memory (RAM), and input/output (I/O) interface(s). The computer platform also includes an operating system and microinstruction code. The various processes and functions described herein may either be part of the microinstruction code or part of the application program (or a combination thereof), which is executed via the operating system. In addition, various other peripheral devices may be connected to the computer platform such as an additional data storage device and a printing device.

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces. Herein, the phrase "coupled" is defined to mean directly connected to or indirectly connected with through one or more intermediate components. Such intermediate components may include both hardware and software based components.

It is to be further understood that, because some of the constituent system components and method steps depicted in the accompanying figures are preferably implemented in software, the actual connections between the system components (or the process steps) may differ depending upon the manner in which the proposed method and apparatus is programmed. Given the teachings herein, one of ordinary skill in the related art will be able to contemplate these and similar implementations or configurations of the proposed method and apparatus.

**References**

[1] L. Fei-Fei et al.: "One-shot learning of object categories", IEEE Transactions on Pattern Analysis and Machine Intelligence, Vol. 28 (2006), pp. 594-611.

[2] B. M. Lake et al.: "One-shot learning by inverting a compositional causal process", in Advances in Neural Information Processing Systems 26 (NIPS 2013), pp. 2526-2534.

**Reference numerals**

| | |
|---|---|
| 10 | Receiving an input training sample |
| 11 | Generating a set of synthetic training samples |
| 12 | Training a deep neural network classifier on the set of synthetic training samples |
| 20 | Classifier |
| 21 | Input |
| 22 | Generalization generator |
| 23 | Deep neural network classifier |
| 24 | Controller |
| 25 | Local storage unit |
| 26 | Output |
| 27 | User interface |
| 30 | Classifier |
| 31 | Processing device |
| 32 | Memory device |
| 33 | Input |
| 34 | Output |
| 40 | Input training samples |
| 41 | Regularization samples |
| 42 | Synthetic training samples |
| 43 | Generalization energy computation block |
| 44 | Backpropagation training block |

**Claims**

1. A method for training a one-shot learning classifier (20), the method comprising:

   - receiving (10) an input training sample (40);
   - generating (11) a set of synthetic training samples (42) from the input training sample (40) using a set of generalization functions; and
   - training (12) a deep neural network classifier (23) on the set of synthetic training samples (42).

2. The method according to claim 1, wherein parameter matrices for the set of generalization functions are determined in a Pareto optimization procedure using a set of regularization samples (41) and the set of synthetic training samples (42) .

3. The method according to claim 2, wherein the Pareto optimization procedure takes into consideration a generalization energy and a classification accuracy.

4. The method according to claim 3, wherein the generalization energy is defined as a log-likelihood similarity metric between the regularization samples (41) and the set of synthetic training samples (42).

5. The method according to claim 4, wherein the generalization energy is defined as a Bhattacharyya distance metric between the regularization samples (41) and the set of synthetic training samples (42).

6. The method according to any of claims 3 to 5, wherein the classification accuracy has a probability measure of '1' if all synthetic training samples (42) have been classified correctly and a probability measure of '0' if none of the synthetic training samples (42) has been classified correctly.

7. The method according to any of claims 2 to 6, wherein the Pareto optimization procedure is repeated when a new regularization sample (41) becomes available.

8. The method according to any of the preceding claims, wherein the one-shot learning classifier (20) is configured to classify road signs.

9. A computer program code comprising instructions, which, when executed by at least one processor, cause the at least one processor to perform the method of any of claims 1 to 8.

10. A one-shot learning classifier (20), comprising:

- an input (21) for receiving (10) an input training sample (40) ;
- a generalization generator (22) for generating (11) a set of synthetic training samples (42) from the input training sample (40) using a set of generalization functions; and
- a deep neural network classifier (23) configured to be trained (12) on the set of synthetic training samples (42).

## FIG 1

```
Receiving an input
training sample                    ⌇ 10

        ↓

Generating a set of
synthetic training samples         ⌇ 11

        ↓

Training a deep neutral network
classifier on the set of
synthetic training samples         ⌇ 12
```

## FIG 2

## FIG 3

## FIG 4

# FIG 5

**a)**

1-D Generative One-Shot Learning - Training Episode 1

**b)**

1-D Generative One-Shot Learning - Training Episode 15

**c)**

1-D Generative One-Shot Learning - Training Episode 32

**d)**

1-D Generative One-Shot Learning - Training Episode 42

FIG 6

Europäisches
Patentamt

European
Patent Office

Office européen
des brevets

# EUROPEAN SEARCH REPORT

Application Number

EP 18 46 5576

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GRIGORESCU SORIN M: "Generative One-Shot Learning (GOL): A Semi-Parametric Approach to One-Shot Learning in Autonomous Vision", 2018 IEEE INTERNATIONAL CONFERENCE ON ROBOTICS AND AUTOMATION (ICRA), IEEE, 21 May 2018 (2018-05-21), pages 7127-7134, XP033403581, DOI: 10.1109/ICRA.2018.8461174 [retrieved on 2018-09-10] * page 7127 - page 7133 * | 1-10 | INV. G06N7/00 G06N3/04 G06N3/08 G06N5/00 |
| | ----- | | |

TECHNICAL FIELDS
SEARCHED    (IPC)

G06N
G06K

The present search report has been drawn up for all claims

| Place of search | Date of completion of the search | Examiner |
|---|---|---|
| The Hague | 20 March 2019 | Klasen, TJ |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
 
& : member of the same patent family, corresponding
document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9141881 B2

- EP 3343432 A1

**Non-patent literature cited in the description**

- **L. FEI-FEI et al.** One-shot learning of object categories. *IEEE Transactions on Pattern Analysis and Machine Intelligence,* 2006, vol. 28, 594-611

- One-shot learning by inverting a compositional causal process. **B. M. LAKE et al.** Advances in Neural Information Processing Systems. NIPS, 2013, vol. 26, 2526-2534